# EUROPEAN PATENT SPECIFICATION

(11) **EP 3 340 633 B1**
(45) Date of publication and mention of the grant of the patent: **14.10.2020**
(21) Application number: 16850176.5
(22) Date of filing: 14.07.2016
(51) Int. Cl.: H04N 21/231, H04N 21/845, H04N 21/858, H04N 21/24, H04N 21/258

(54) **TERMINAL, CACHE SERVER, AND METHOD FOR ACQUIRING VIDEO SLICES AND DEVICE THEREOF**
ENDGERÄT, CACHE-SERVER UND VERFAHREN ZUR ERFASSUNG VON VIDEOSLICES UND VORRICHTUNG DAFÜR
TERMINAL, SERVEUR DE MÉMOIRE CACHE ET PROCÉDÉ POUR ACQUÉRIR DES TRANCHES VIDÉO ET DISPOSITIF ASSOCIÉ

(30) Priority: 30.09.2015 CN 201510644214
(43) Date of publication of application: 27.06.2018
(73) Proprietor: Huawei Technologies Co., Ltd., Longgang District Shenzhen, Guangdong 518129 (CN)
(72) Inventor: XUE, Chuansong, Shenzhen Guangdong 518129 (CN)
(74) Representative: Körber, Martin Hans
(86) International application number: PCT/CN2016/090067
(87) International publication number: WO 2017/054552

(56) References cited:
- EP-A1- 2 640 034
- WO-A1-2012/093718
- WO-A1-2013/163448
- CN-A- 102 088 620
- CN-A- 102 123 303
- CN-A- 104 349 176

## Description

### TECHNICAL FIELD

The present invention relates to the field of information technologies, and in particular, to a terminal, a cache server, and a video fragment obtaining method and apparatus.

### BACKGROUND

The Hypertext Transfer Protocol streaming (Hypertext Transfer Protocol Streaming, HTTP Streaming for short) protocol is a streaming media transfer protocol based on the Hypertext Transfer Protocol. The HTTP Streaming protocol features in fragmenting a video file for storage, and generating video index information and video fragments, to facilitate smooth playing of the video file. The video index information includes master file information and sub-file information. The master file information includes download addresses of sub-file information corresponding to the video file at different bit rates. Each of the sub-file information includes download addresses of different video fragments of the video file at a bit rate.

Currently, in a video fragment obtaining method, a terminal first obtains a uniform resource locator (Uniform Resource Locator, URL for short) for a user to select a video file on a portal site, and sends content service request information carrying the URL to a scheduling server on a content delivery network (English full name: Content Delivery Network, CDN for short), so that the scheduling server selects a suitable cache server and sends a URL corresponding to address information of the cache server to the terminal. Then, the terminal sends request information for obtaining master file information corresponding to the video file to the cache server according to the URL corresponding to the address information of the cache server, so that the cache server obtains the master file information from a source site. The cache server obtains the master file information from the source site and sends the master file information to the terminal. The terminal obtains a download address of each piece of sub-file information corresponding to the video file by using the master file information, determines, from the master file information according to a download rate of the terminal, a download address of sub-file information corresponding to a bit rate lower than the download rate of the terminal, and sends, to the cache server, request information for requesting the sub-file information. Next, the cache server obtains, from the source site, the sub-file information corresponding to the bit rate, and sends the sub-file information to the terminal, so that the terminal obtains a download address of a video fragment corresponding to the bit rate. Finally, the terminal sends a request message for obtaining the video fragment to the cache server, so that the cache server obtains the video fragment from the source site and sends the video fragment to the terminal.
The document WO 2013/163448 A1 shows a block streaming system and a method for structuring data of video content to be served, e.g. ingesting content, preparing that content and packaging it for service by an HTTP streaming server or HTTP cache. A segment index is included in each segment to signal time offsets and byte ranges such that a client downloads the appropriate pieces of files or media segments. The client switches to different data rates based on available bandwidth and triggers.
The document EP 2 640 034 A1 shows a method and apparatus for acquiring popularity of each video segment according to statistics of user behaviors in a period of time and creating on a local server a cache list according to the cache information stored on the basis that the identifier of the video segment corresponds to the information about the server that stores the video segment, the end-to-end delay, and the popularity of each video segment. When a user requests a certain video segment, the user first requests the content from a local server in the place where the user is located. A cached video segment is replaced with a candidate video segment if a consolidated gain value of the cached video segment and a consolidated gain value of the candidate video segment in the local server meet a replacement condition, wherein the consolidated gain value is a weighted sum of the gain value of the neighbor server and the local server.

When a video fragment is obtained in the prior art, a terminal requests the video fragment from a cache server. However, because the cache server may not store the video fragment, the cache server needs to request and obtain the video fragment from a source site, and then sends the obtained video fragment to the terminal. As a result, a time for obtaining the video fragment by the terminal increases, leading to a relatively long delay of playing the video fragment on the terminal.

### SUMMARY

The present invention provides a terminal, a cache server, and a video fragment obtaining method and apparatus, to reduce a delay of playing a video fragment on a terminal.

The technical solutions used in the present invention are as follows:
According to a first aspect, the present invention provides a video fragment obtaining method, where the method is used by a terminal to obtain a video fragment of a video file, and includes:
determining, according to a trigger condition for obtaining a video fragment, that a video fragment needing to be obtained by the terminal is an N^{th} video fragment of the video file, where N is a positive integer;
obtaining video index information of the video file from a cache server, where the video index information includes sub-file information corresponding to at least two bit rates, and sub-file information corresponding to each bit rate includes download addresses of different video fragments and corresponding priority information;
determining a download address of the N^{th} video fragment according to a download rate of the terminal and the video index information;
sending a request message for obtaining a video fragment to the cache server, where the request message for obtaining a video fragment includes the download address of the N^{th} video fragment; and
receiving the N^{th} video fragment returned by the cache server.

The priority information is used to represent a probability that a video fragment stored on the cache server is eliminated, and the priority information includes popularity information, and higher-popularity information represents a smaller probability that a video fragment that is stored on the cache server and corresponds to the popularity information is eliminated.

The step of determining a download address of the Nth video fragment according to a download rate of the terminal and the video index information specifically includes:
determining, according to the download rate of the terminal, sub-file information corresponding to a bit rate satisfying the download rate of the terminal; and
obtaining, from the sub-file information corresponding to the bit rate satisfying the download rate of the terminal, a download address of an Nth video fragment in sub-file information that corresponds to the bit rate and in which the Nth video fragment has highest-popularity information; or
determining, according to the download rate of the terminal, that sub-file information corresponding to a bit rate satisfying the download rate of the terminal does not exist; and
obtaining, from the video index information, a download address of an Nth video fragment in sub-file information corresponding to a lowest bit rate.

With reference to the first aspect, in a first possible implementation of the first aspect,
the trigger condition is specifically:
bit rate conversion information entered by a user is received; or
information indicating that frame freezing occurs in playing of the video file is received; or
a touch operation of a user is received, where the touch operation includes a dragging operation.

With reference to the first aspect or the first possible implementation of the first aspect, in a second possible implementation of the first aspect, when the popularity information is 0 or null, it represents that the cache server stores no video fragment corresponding to the popularity information.

According to a second aspect, the present invention provides another video fragment obtaining method, where the method is applied to a cache server, and the method includes:
obtaining video index information of a video file from a source site and saving the video index information;
monitoring a quantity of times that each video fragment of the video file is requested, to obtain priority information of each video fragment of the video file;
periodically obtaining the priority information corresponding to each video fragment of the video file, and adding the obtained priority information corresponding to each video fragment of the video file to the video index information;
receiving a request, sent by a terminal, for obtaining the video index information; and sending the video index information to the terminal, so that the terminal determines, according to the video index information, a download address of a video fragment needing to be downloaded wherein the priority information is used to represent a probability that a video fragment stored on the cache server is eliminated;
wherein the priority information comprises popularity information, and higher-popularity information represents a smaller probability that a video fragment that is stored on the cache server and corresponds to the popularity information is eliminated.

Before the adding the obtained priority information corresponding to each video fragment of the video file to the video index information, the method further includes: determining whether each video fragment of the video file is locally cached; and the adding the priority information corresponding to each video fragment of the video file to the video index information is specifically: when the video fragment is locally cached, adding the obtained priority information corresponding to the video fragment to the video index information; or when the video fragment is not locally cached, setting the obtained priority information corresponding to the video fragment to 0 or null, and adding the obtained priority information to the video index information.

With reference to the second aspect, in a first possible implementation of the second aspect, the priority information of the video fragment is specifically:
a quantity of times that the video fragment is requested; or
obtained through conversion according to a preset rule and a quantity of times that the video fragment is requested.

According to a third aspect, the present invention provides a video fragment obtaining apparatus, where the apparatus is located in a terminal, and includes:
a determining unit, configured to determine, according to a trigger condition for obtaining a video fragment, that a video fragment needing to be obtained by the terminal is an N^{th} video fragment of the video file, where N is a positive integer;
an obtaining unit, configured to obtain video index information of the video file from a cache server, where the video index information includes sub-file information corresponding to at least two bit rates, and sub-file information corresponding to each bit rate includes download addresses of different video fragments and corresponding priority information, where
the determining unit is further configured to determine a download address of the N^{th} video fragment according to a download rate of the terminal and the video index information that is obtained by the obtaining unit;
a sending unit, configured to send a request message for obtaining a video fragment to the cache server, where the request message for obtaining a video fragment includes the download address of the N^{th} video fragment determined by the determining unit; and
a receiving unit, configured to receive the N^{th} video fragment returned by the cache server.

The priority information includes popularity information, and higher-popularity information represents a smaller probability that a video fragment that is stored on the cache server and corresponds to the popularity information is eliminated.

The determining unit specifically includes a determining module and an obtaining module, where
the determining module is configured to determine, according to the download rate of the terminal, sub-file information corresponding to a bit rate satisfying the download rate of the terminal; and
the obtaining module is configured to obtain, from the sub-file information that corresponds to the bit rate satisfying the download rate of the terminal and that is determined by the determining module, a download address of an Nth video fragment in sub-file information that corresponds to the bit rate and in which the Nth video fragment has highest-popularity information; or
the determining module is further configured to determine, according to the download rate of the terminal, that sub-file information corresponding to a bit rate satisfying the download rate of the terminal does not exist; and
the obtaining module is further configured to obtain, from the video index information, a download address of an Nth video fragment in sub-file information corresponding to a lowest bit rate.

With reference to the third aspect, in a first possible implementation of the third aspect, the trigger condition is: bit rate conversion information entered by a user is received; or
information indicating that frame freezing occurs in playing of the video file is received; or
a touch operation of a user is received, where the touch operation includes a dragging operation.

With reference to the third aspect or the first possible implementation of the third aspect, in a second possible implementation of the third aspect,
the trigger condition is specifically:
bit rate conversion information entered by a user is received; or
information indicating that frame freezing occurs in playing of the video file is received; or
a touch operation of a user is received, where the touch operation includes a dragging operation. With reference to the third aspect or the first or second possible implementation of the third aspect, in a fourth possible implementation of the third aspect, when the popularity information is 0 or null, it represents that the cache server stores no video fragment corresponding to the popularity information.

According to a fourth aspect, the present invention provides another video fragment obtaining apparatus, where the apparatus is located in a cache server, and the apparatus includes:
an obtaining unit, configured to obtain video index information of a video file from a source site;
a saving unit, configured to save the video index information of the video file;
   a monitoring unit, configured to monitor a quantity of times that each video fragment of the video file is requested, to obtain priority information of each video fragment of the video file, wherein the priority information is used to represent a probability that a video fragment stored on the cache server is eliminated;
wherein the priority information comprises popularity information, and higher-popularity information represents a smaller probability that a video fragment that is stored on the cache server and corresponds to the popularity information is eliminated; and
the obtaining unit is further configured to periodically obtain the priority information corresponding to each video fragment of the video file;
an adding unit, configured to add the priority information that is obtained by the obtaining unit and corresponds to each video fragment of the video file to the video index information;
a receiving unit, configured to receive a request, sent by a terminal, for obtaining the video index information; and
a sending unit, configured to send the video index information to the terminal, so that the terminal determines, according to the video index information, a download address of a video fragment needing to be downloaded.

The apparatus further includes a determining unit, where
the determining unit is configured to determine whether each video fragment of the video file is locally cached; and
the adding unit is specifically configured to: when the determining unit determines that the video fragment is locally cached, add the obtained priority information corresponding to the video fragment to the video index information; or when the determining unit determines that the video fragment is not locally cached, set the obtained priority information corresponding to the video fragment to 0 or null, and add the obtained priority information to the video index information.

With reference to the fourth aspect, in a first possible implementation of the fourth aspect, the priority information of the video fragment is specifically:
a quantity of times that the video fragment is requested; or

obtained through conversion according to a preset rule and a quantity of times that the video fragment is requested. According to a fifth aspect, the present invention provides a video fragment obtaining terminal, including:
a memory, configured to store computer executable program code; and
a transceiver, and a processor coupled to the memory and the transceiver, where
the program code includes an instruction, and the processor executes the instruction, to instruct a network element to perform the following operations:
   determining, according to a trigger condition for obtaining a video fragment, that a video fragment needing to be obtained by the terminal is an N^{th} video fragment of the video file, where N is a positive integer;
   obtaining video index information of the video file from a cache server, where the video index information includes sub-file information corresponding to at least two bit rates, and sub-file information corresponding to each bit rate includes download addresses of different video fragments and corresponding priority information;
   determining a download address of the N^{th} video fragment according to a download rate of the terminal and the video index information;
   sending a request message for obtaining a video fragment to the cache server, where the request message for obtaining a video fragment includes the download address of the N^{th} video fragment; and
   receiving the N^{th} video fragment returned by the cache server.

According to a sixth aspect, the present invention provides a cache server, including:
a memory, configured to store computer executable program code; and
a transceiver, and a processor coupled to the memory and the transceiver, where
the program code includes an instruction, and the processor executes the instruction, to instruct a network element to perform the following operations:
   obtaining video index information of a video file from a source site and saving the video index information;
   monitoring a quantity of times that each video fragment of the video file is requested, to obtain priority information of each video fragment of the video file;
   periodically obtaining the priority information corresponding to each video fragment of the video file, and adding the obtained priority information corresponding to each video fragment of the video file to the video index information;
   receiving a request, sent by a terminal, for obtaining the video index information; and
   sending the video index information to the terminal, so that the terminal determines, according to the video index information, a download address of a video fragment needing to be downloaded.

Compared with the prior art in which to-be-played video fragment information is obtained, according to the terminal and the video fragment obtaining method that are provided in the embodiments of the present invention, when the terminal needs to obtain an N^{th} video fragment of a video file, the terminal determines, as a request address according to priority information of N^{th} video fragments at different bit rates in video index information and a download rate of the terminal, a download address of an N^{th} video fragment that corresponds to highest-priority information and is at a bit rate satisfying the download rate of the terminal, to obtain the video fragment. According to the solutions provided in the present invention, a probability that a cache server obtains a video fragment from a source site can be reduced, thereby reducing a time for obtaining a video fragment by a terminal, and further reducing a delay of playing the video fragment on the terminal.

Compared with the prior art in which to-be-played video fragment information is obtained, in the present invention, the cache server monitors a quantity of times that each video fragment of the video file is requested, to obtain priority information of each video fragment; adds the priority information of each video fragment to the video index information, so that the terminal can determine, according to the priority information of the video fragment in the video index information, a probability that each video fragment is stored on the cache server, and preferably select a video fragment that is quite possibly locally cached on the cache server. This reduces a probability that the cache server obtains a video fragment from a source site, thereby reducing a time for obtaining a video fragment by the terminal, and further reducing a delay of playing the video fragment.

### BRIEF DESCRIPTION OF DRAWINGS

To describe the technical solutions in the present invention or in the prior art more clearly, the following briefly describes the accompanying drawings required for describing the present invention or the prior art. Apparently, the accompanying drawings in the following description show merely some embodiments of the present invention, and a person of ordinary skill in the art may still derive other drawings from these accompanying drawings without creative efforts.
FIG. 1 is a network architecture diagram of a content delivery network;
FIG. 2 is a flowchart of a video fragment obtaining method according to an example;
FIG. 3 is a flowchart of another video fragment obtaining method according to an embodiment of the present invention;
FIG. 4 is a flowchart of still another video fragment obtaining method according to an example;
FIG. 5 is a flowchart of still another video fragment obtaining method according to an embodiment of the present invention;
FIG. 6 is a schematic structural diagram of a video fragment obtaining apparatus according to an embodiment of the present invention;
FIG. 7 is a schematic structural diagram of another video fragment obtaining apparatus according to an embodiment of the present invention;
FIG. 8 is a schematic structural diagram of still another video fragment obtaining apparatus according to an embodiment of the present invention;
FIG. 9 is a schematic structural diagram of a video fragment obtaining terminal according to an embodiment of the present invention; and
FIG. 10 is a schematic structural diagram of a cache server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

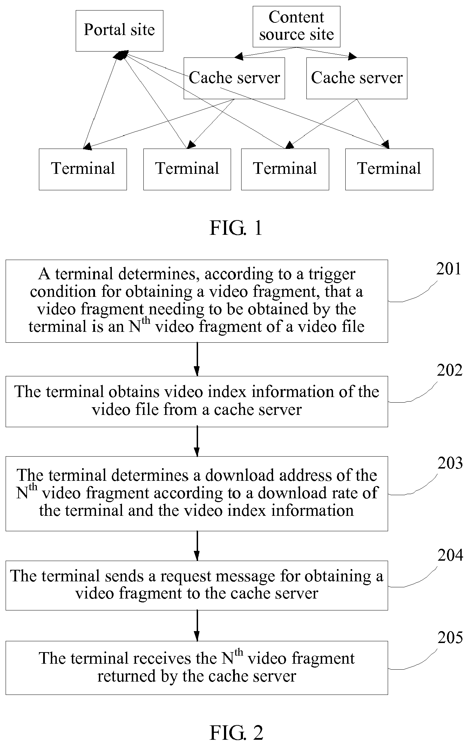

The embodiments of the present invention provide a system architecture for obtaining a video fragment. The system includes a cache server, a content source site, and a terminal. Optionally, a portal site is further included. As shown in FIG. 1, communication connections exist between the terminal and the cache server, between the cache server and the source site, and between the portal site and the terminal.

For example, the terminal accesses a portal site of Sohu, clicks a link to *Friends* for playing, and determines that the first video fragment of *Friends* needs to be obtained. The terminal requests master file information of a video file corresponding to *Friends* from the cache server. If the master file information corresponding to *Friends* is stored on the cache server, the cache server directly returns the master file information of the video file. If the master file information corresponding to *Friends* is not stored on the cache server, the cache server obtains the master file information of the video file from the source site and sends the master file information of the video file to the terminal. The terminal parses the master file information to obtain download addresses of all sub-file information, and sends a request message carrying all the sub-file download addresses to the cache server. The cache server obtains all the sub-file information of the video file, and sends the sub-file information to the terminal. The terminal selects, from all the sub-file information of the video file according to a download rate of the terminal, a download address of the first video fragment, needing to be obtained, of *Friends,* and sends a request message carrying the download address to the cache server. The cache server detects whether the video fragment is locally stored; and returns the video fragment to the terminal if the video fragment is stored; or if the video fragment is not stored, obtains the video fragment from the source site and sends the video fragment to the terminal.

An example provides a video fragment obtaining method, so as to reduce a delay of obtaining a video fragment by a terminal. As shown in FIG. 2, the method includes the following steps.

201: The terminal determines, according to a trigger condition for obtaining a video fragment, that a video fragment needing to be obtained by the terminal is an N^{th} video fragment of a video file.

N is a positive integer.

During practical networking, to meet requirements of the terminal for different download rates, each video file has versions corresponding to different bit rates on a source site. In this embodiment of the present invention, each video file is divided into multiple video fragments for storage.

In this example, each video file may be fragmented in the unit of 10 seconds (s), and each video file has versions corresponding to different bit rates. Therefore, each video fragment of the video file has versions corresponding to different bit rates.

For example, as shown in Table 1, for a 30s video file, 0 to 10s may be the first video fragment, 10s to 20s may be the second video fragment, and 20s to 30s may be the third video fragment. In addition, bit rates corresponding to the first video fragment, the second video fragment, and the third video fragment may include: 1000 kbps, 1500 kbps, and 2000 kbps.

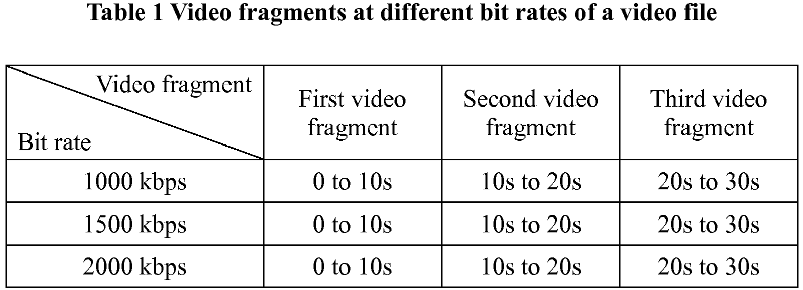

In this example, the trigger condition is specifically: Bit rate conversion information entered by a user is received; or information indicating that frame freezing occurs in playing of the video file is received; or a touch operation of a user is received, where the touch operation includes a dragging operation.

In this example, when the terminal receives the bit rate conversion information entered by the user, for example, converting a top-speed version into a high-definition version, the terminal determines which video fragment of the video file is the video fragment currently needing to be obtained by the user. For example, when the terminal receives the bit rate conversion information entered by the user, if the terminal is to play a frame at the 15^{th} second (s) of the video file, the terminal needs to obtain the second video fragment of the video file.

In this example, when the terminal detects that frame freezing occurs in playing of a video file, the terminal needs to determine a to-be-played video fragment. For example, if the terminal detects that frame freezing occurs at the 15^{th} second of the video file, the terminal determines that the video fragment needing to be obtained is the second video fragment of the video file.

In this example, when the terminal receives the dragging operation of the user, the terminal needs to determine a location obtained after the dragging operation of the user, to determine a to-be-played video fragment. For example, the location obtained after the dragging operation of the user is at the 15^{th} second of the video file, the terminal determines that the video fragment needing to be obtained by the terminal is the second video fragment of the video file.

202: The terminal obtains video index information of the video file from a cache server.

The video index information includes sub-file information corresponding to at least two bit rates, and sub-file information corresponding to each bit rate includes download addresses of different video fragments and corresponding priority information.

In this example, the priority information is used to represent a probability that a video fragment stored on the cache server is eliminated. Higher-priority information represents a smaller probability that a video fragment stored on the cache server is eliminated, and lower-priority information represents a larger probability that a video fragment stored on the cache server is eliminated.

Optionally, the priority information includes popularity information. Higher-popularity information represents a smaller probability that a video fragment that is stored on the cache server and corresponds to the popularity information is eliminated. In this example, when the popularity information is 0 or null, it represents that the cache server stores no video fragment corresponding to the popularity information.

In this example, each video file has one piece of corresponding video index information, and the cache server obtains the video index information corresponding to the video file from the source site on which the video file is stored, and locally saves the video index information. In this example, the video index information includes sub-file information corresponding to at least two bit rates, and sub-file information corresponding to each bit rate includes download addresses of different video fragments at the bit rate and corresponding priority information.

In this example, the terminal first obtains, from the cache server, master file information corresponding to the video fragment needing to be obtained, and obtains, from the master file information, download addresses of sub-file information corresponding to video fragments at all bit rates; and then obtains, from the cache server according to the download addresses, the sub-file information of the video fragments at all the bit rates. Specifically, the video index information obtained by the terminal may be as follows:

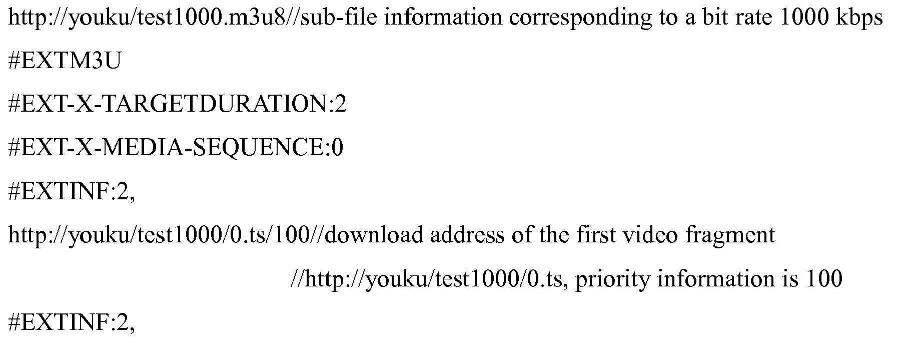

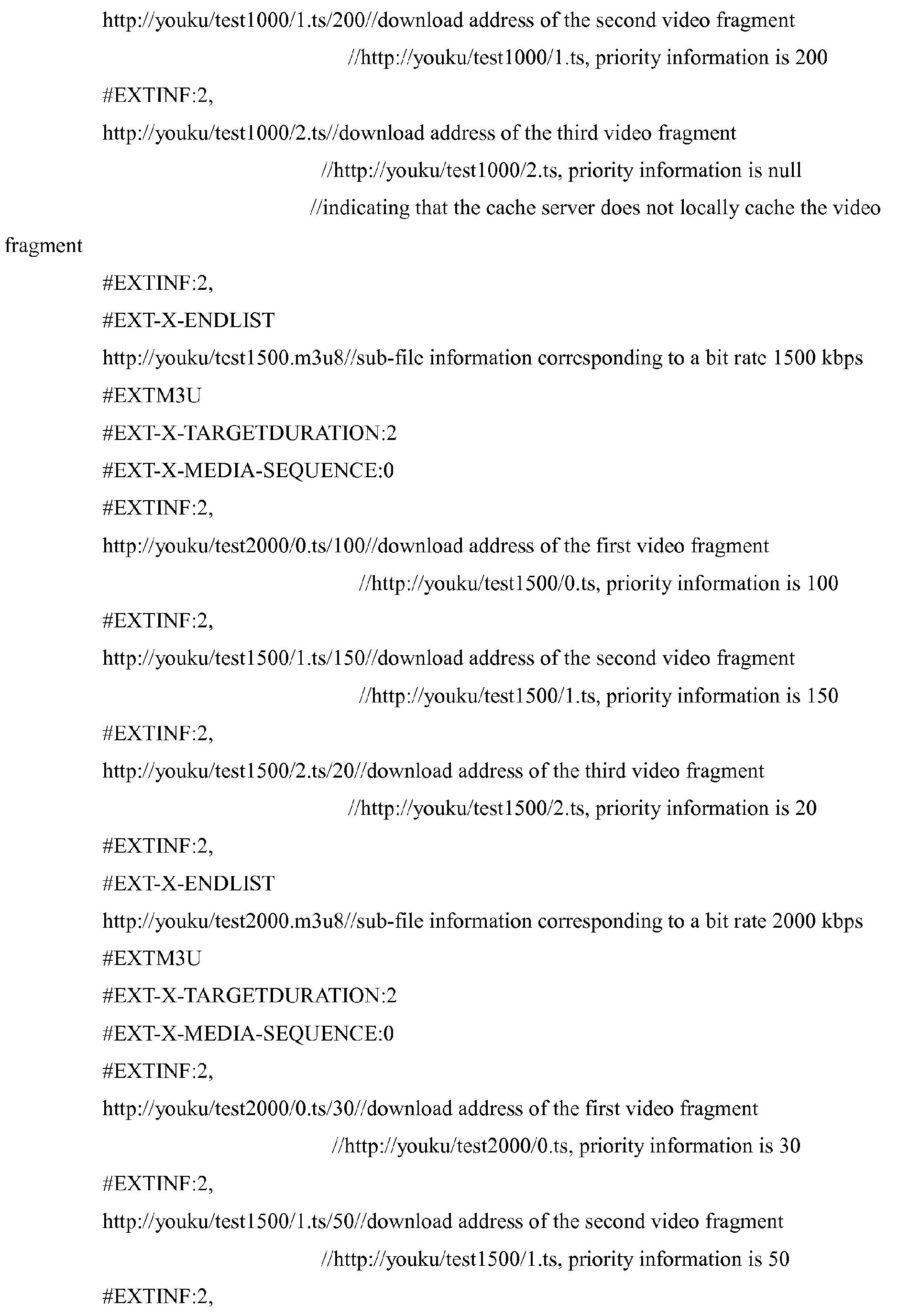

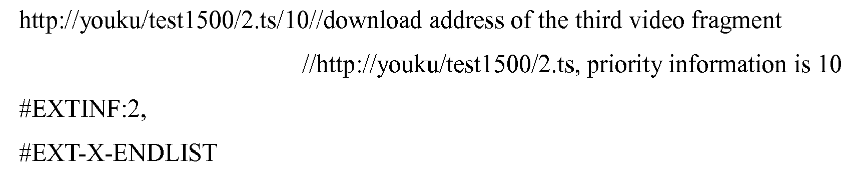

203: The terminal determines a download address of the N^{th} video fragment according to a download rate of the terminal and the video index information.

In this example, the download rate of the terminal includes a historical download rate of the terminal or a current download rate of the terminal.

In this example, because each video file has at least two versions corresponding to different bit rates, each video fragment of the video file includes at least two versions corresponding to the different bit rates. Therefore, the terminal first determines, according to the download rate, a bit rate of a video fragment satisfying the download rate. Then, if there are two or more video fragments satisfying the download rate, the terminal determines, according to priority information of a video fragment at each bit rate, a video fragment that corresponds to higher-priority information and is at the bit rate, and obtains a download address of the video fragment at the bit rate from sub-file information corresponding to the video fragment. Using step 201 and step 202 as an example, the terminal needs to obtain the second video fragment. Priority information of the second video fragment of a version corresponding to the bit rate 1000 kbps is 200, priority information of the second video fragment of a version corresponding to the bit rate 1500 kbps is 150, and priority information of the second video fragment of a version corresponding to the bit rate 2000 kbps is 50. Assuming that a current download rate of the terminal is 1600 kbps, the terminal determines that the video fragments at the bit rate 1000 kbps and bit rate 1500 kbps satisfy the current download rate of the terminal. Further, because the second video fragment at the bit rate 1000 kbps corresponds to a highest priority, the terminal determines that the download address of the second video fragment at the bit rate 1000 kbps, that is, http://youku/test1000/1.ts, is a download address of the video fragment needing to be obtained by the terminal.

204: The terminal sends a request message for obtaining a video fragment to the cache server.

The request message for obtaining a video fragment includes the download address of the N^{th} video fragment.

In this example, after determining the video fragment needing to be obtained, the terminal obtains a download address of the video fragment from sub-file information corresponding to the video fragment, and sends the download address corresponding to the needed video fragment to the cache server by using a request message.

For example, if the download address of the video fragment needing to be obtained by the terminal is http://youku/test1000/1.ts, the terminal sends a video fragment request message carrying the download address http://youku/test1000/1.ts to the cache server.

205: The terminal receives the N^{th} video fragment returned by the cache server.

In this example, after requesting the video fragment from the cache server, the terminal receives the video fragment subsequently returned by the cache server.

According to the video fragment obtaining method provided in this embodiment of the present invention, that a video fragment needing to be obtained by a terminal is an N^{th} video fragment of a video file is first determined according to a trigger condition for obtaining a video fragment. Compared with the prior art in which a video fragment is obtained, in this embodiment of the present invention, when the terminal needs to obtain the N^{th} video fragment of the video file, the terminal determines, as a request address according to priority information of N^{th} video fragments at different bit rates in video index information and a download rate of the terminal, a download address of an N^{th} video fragment that corresponds to highest-priority information and is at a bit rate satisfying the download rate of the terminal, to obtain the video fragment. According to the solution provided in the present invention, a probability of an upstream operation of a cache server can be reduced, thereby reducing a time for obtaining a video fragment by a terminal, and further reducing a delay of playing the video fragment on the terminal.

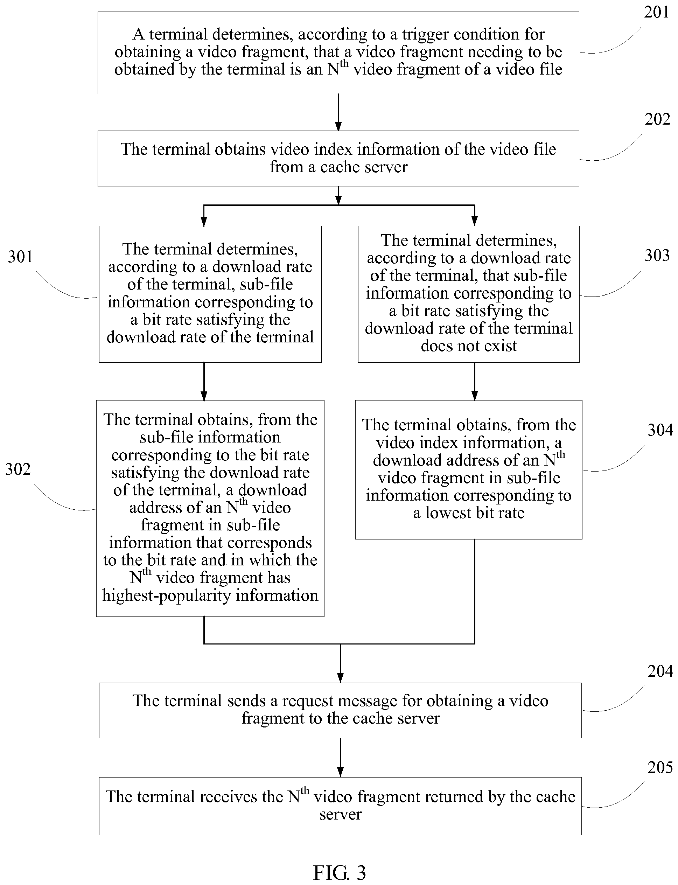

In another possible implementation of this example, based on the implementation shown in FIG. 2, step 203 of determining, by the terminal, a download address of the N^{th} video fragment according to a download rate of the terminal and the video index information may further specifically include step 301 to step 304 shown in FIG. 3.

301: The terminal determines, according to the download rate of the terminal, sub-file information corresponding to a bit rate satisfying the download rate of the terminal.

In this embodiment of the present invention, the terminal determines, according to the download rate of the terminal, that a bit rate corresponding to the video fragment needing to be obtained is less than or equal to the download rate of the terminal.

For example, if a current download rate of the terminal is 1600 bit rate (kbps), and the video fragment needing to be obtained by the terminal has versions corresponding to three bit rates, namely 1000 kbps, 1500 kbps, and 2000 kbps, bit rates of video fragments satisfying the download rate of the terminal respectively are 1000 kbps and 2000 kbps.

302: The terminal obtains, from the sub-file information corresponding to the bit rate satisfying the download rate of the terminal, a download address of an N^{th} video fragment in sub-file information that corresponds to the bit rate and in which the N^{th} video fragment has highest-popularity information.

In this embodiment of the present invention, the terminal first determines a bit rate corresponding to a video fragment satisfying the download rate of the terminal, and then obtains, from sub-file information corresponding to the bit rate, popularity information corresponding to the N^{th} video fragment, to obtain a download address of the N^{th} video fragment in sub-file information that corresponds to the bit rate and in which the N^{th} video fragment has highest-popularity information.

In this embodiment of the present invention, the terminal first determines, according to the download rate of the terminal, a bit rate satisfying the download rate, and determines, according to popularity information, a download address corresponding to the video fragment needing to be obtained by the terminal. Therefore, on the premise of satisfying the download rate of the terminal, there is a higher probability that the video fragment can be directly obtained from the cache server, and the cache server does not need to first obtain the video fragment from the source site and then send the video fragment to the terminal. This reduces a time for obtaining the video fragment by the terminal, and further, can reduce a delay of playing the video fragment.

303: The terminal determines, according to the download rate of the terminal, that sub-file information corresponding to a bit rate satisfying the download rate of the terminal does not exist.

In this embodiment of the present invention, the terminal determines, according to the download rate of the terminal, that all bit rates corresponding to the video file are greater than the download rate of the terminal. That is, sub-file information corresponding to a bit rate satisfying the download rate of the terminal does not exist.

For example, the download rate of the terminal is 900 kbps, and bit rates of the video file respectively are 1000 kbps, 1500 kbps, and 2000 kbps. All bit rates of the video file are greater than the download rate of the terminal. That is, sub-file information corresponding to a bit rate satisfying the download rate of the terminal does not exist.

304: The terminal obtains, from the video index information, a download address of an N^{th} video fragment in sub-file information corresponding to a lowest bit rate.

In this embodiment of the present invention, if a bit rate satisfying the download rate of the terminal does not exist, the terminal obtains, from the video index information, the download address of the N^{th} video fragment in the sub-file information corresponding to the lowest bit rate.

For example, the download rate of the terminal is 900 kbps, and bit rates of the video file respectively are 1000 kbps, 1500 kbps, and 2000 kbps. The terminal obtains, from the video index information, a download address of the N^{th} video fragment in sub-file information corresponding to the bit rate 1000 kbps.

In this embodiment of the present invention, after determining that sub-file information corresponding to a bit rate satisfying the download rate of the terminal does not exist, the terminal can select the download address of the N^{th} video fragment in the sub-file information corresponding to the lowest bit rate, thereby reducing a probability that frame freezing occurs in playing of the video fragment.

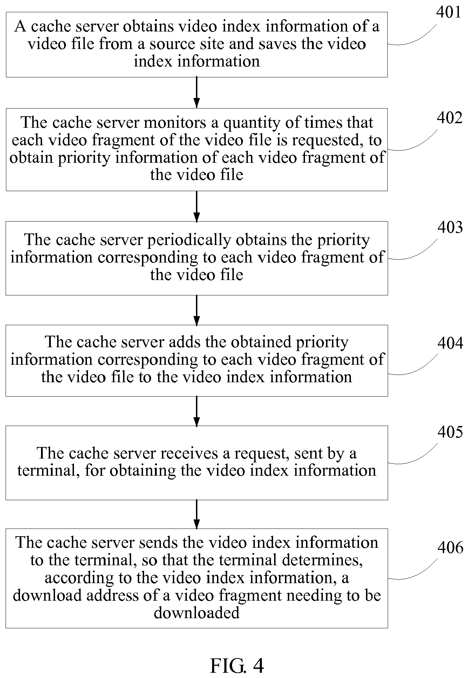

An example further provides a video fragment obtaining method. As shown in FIG. 4, the method includes the following steps.

401: A cache server obtains video index information of a video file from a source site and saves the video index information.

In this embodiment of the present invention, the video index information includes master file information and sub-file information.

In this example, the cache server obtains video index information of each video fragment from the source site, and saves the video index information of each video fragment to a local cache of the cache server. In this example, the cache server records a storage path of the video index information of the video file. The video index information is represented by using a URL of the video index information.

For example, as shown in Table 2, video index information is http://youku/test.m3u8, http://youku/test1500.m3u8, http://youku/test2500.m3u8, and http://youku/test3500.m3u8, and corresponding storage paths respectively are /youku/test.m3u8, /youku/test1500.m3u8, /youku/test2500.m3u8, and /youku/test3500.m3u8.

**Table 2 Storage of video index information**

| URL of video index information | Local storage path of video index information |
|---|---|
| http://youku/test.m3u8 | /youku/test.m3u8 |
| http://youku/test 1000.m3u8 | /youku/test1000.m3u8 |
| http://youku/test 1500.m3u8 | /youku/test1500.m3u8 |
| http://youku/test2000.m3u8 | /youku/test2000.m3u8 |

402: The cache server monitors a quantity of times that each video fragment of the video file is requested, to obtain priority information of each video fragment of the video file.

In this example, the cache server monitors a quantity of times that each video fragment of the video file is requested in a preset period, to obtain priority information of each video fragment of the video file. The priority information may be popularity information.

The priority information of the video fragment is specifically a quantity of times that the video fragment is requested; or is obtained through conversion according to a preset rule and a quantity of times that the video fragment is requested.

For example, if a quantity of times that a video fragment is requested is 300, priority information of the video fragment is 300. Alternatively, a quantity 300 of times that a video fragment is requested may be converted according to a preset rule, to obtain that priority information is 3. The preset rule may be dividing the quantity of times that the video fragment is requested by 100, that is, DIV (the quantity of times that the video fragment is requested, 100).

403: The cache server periodically obtains the priority information corresponding to each video fragment of the video file.

In this example, the cache server obtains the priority information corresponding to each video fragment of the video file every hour, every half day, or every other day. This is not limited in this embodiment of the present invention.

404: The cache server adds the obtained priority information corresponding to each video fragment of the video file to the video index information.

In this example, each video fragment has corresponding video index information. The cache server adds the obtained priority information corresponding to each video fragment of the video file to video index information corresponding to the video fragment.

In this example, as shown in Table 3, the cache server stores, in a particular storage format, a local storage path and priority information of a video fragment, and information indicating whether the video fragment is locally cached.

**Table 3 Storage of a video fragment**

| URL of a video fragment | Local storage path | Priority information | Whether a video fragment is locally cached |
|---|---|---|---|
| http ://youku/test 1500/0.ts | /youku/test1500/0.ts | 100 | 1 |
| http://youku/test1500/1.ts | /youku/test1500/1.ts | 200 | 1 |
| http://youku/test 1500/2.ts | /youku/test1500/2.ts | 5 | 0 |

"1" represents that a video fragment is locally stored, and "0" represents that a video fragment is not locally stored.

405: The cache server receives a request, sent by a terminal, for obtaining the video index information.

406: The cache server sends the video index information to the terminal, so that the terminal determines, according to the video index information, a download address of a video fragment needing to be downloaded.

It should be noted that in this example, when the cache server receives the request, sent by the terminal, for obtaining the video index information, the cache server sends the master file information to the terminal. The terminal parses the master file information to obtain download addresses of all sub-file information. The cache server receives a request message carrying the download addresses of all the sub-file information, and sends all the sub-file information to the terminal, so that the terminal determines, according to the download rate of the terminal and priority information in the sub-file information, the download address of the video fragment needing to be downloaded.

According to the video fragment obtaining method provided in this example, compared with the prior art in which a to-be-played video fragment is obtained, in this embodiment of the present invention, a cache server monitors a quantity of times that each video fragment of a video file is requested, to obtain priority information of each video fragment; adds the priority information of each video fragment to video index information, so that a terminal can determine, according to the priority information of the video fragment in the video index information, a probability that each video fragment is stored on the cache server, and preferably select a video fragment that is quite possibly locally cached on the cache server. This reduces a probability that the cache server obtains a video fragment from a source site, thereby reducing a time for obtaining a video fragment by the terminal, and further, reducing a delay of playing the video fragment.

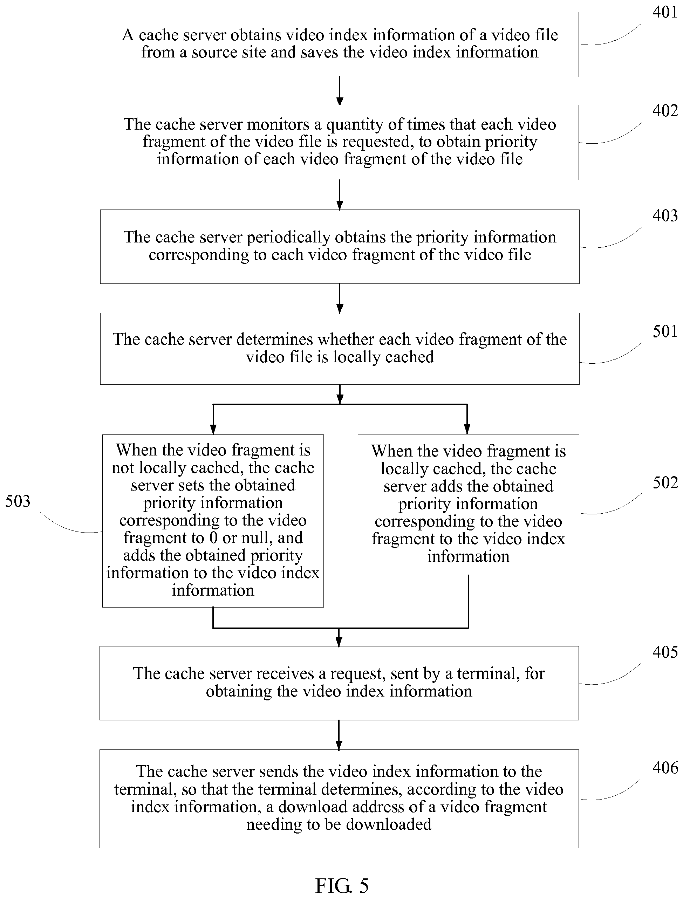

In another possible implementation of this example, based on the implementation shown in FIG. 4, before step 404 of adding, by the cache server, the obtained priority information corresponding to each video fragment of the video file to the video index information, the method may further include step 501 shown in FIG. 5, and step 404 of adding, by the cache server, the obtained priority information corresponding to each video fragment of the video file to the video index information may further specifically include step 502 or step 503 shown in FIG. 5.

501: The cache server determines whether each video fragment of the video file is locally cached.

502: When the video fragment is locally cached, the cache server adds the obtained priority information corresponding to the video fragment to the video index information.

For example, as shown in Table 3, local storage statuses of the video fragment http://youku/test1500/0.ts and the video fragment http://youku/test1500/1.ts are 1, it represents that the two video fragments are locally stored. Priority information corresponding to the two video fragments is respectively added to corresponding video index information.

503: When the video fragment is not locally cached, the cache server sets the obtained priority information corresponding to the video fragment to 0 or null, and adds the obtained priority information to the video index information.

For example, as shown in Table 3, a local storage status of the video fragment http://youku/test1500/2.ts is 0, it represents that the video fragment is not locally stored. Priority information corresponding to the video fragment is set to 0 or null, and then is added to video index information.

It should be noted that because the cache server receives requests from a large quantity of terminals all the time, priority information of video fragments in the cache server always changes. In this embodiment of the present invention, the step of obtaining priority information of a video fragment and adding the priority information to video index information is performed periodically, for example, may be performed every morning when a traffic flow is relatively small. Therefore, when the terminal obtains video index information from the cache server at a moment, priority information, included in the video index information, of a video fragment may be inaccurate (because data is obtained in the morning of that day). This is the meaning of introducing priority information in this embodiment of the present invention. Because the cache server has limited storage space, when space of the cache server is insufficient, a video fragment with low-priority information is preferably eliminated. High-priority information of a video fragment means a higher probability that the video fragment is still cached on the cache server for a time period in the future.

In this embodiment of the present invention, a cache server determines whether a video fragment is locally cached, to add priority information corresponding to the video fragment to corresponding video index information, or set priority information corresponding to the video fragment to 0 or null and add the priority information to corresponding video index information. In this way, a terminal may determine, according to the priority information of the video fragment in the video index information, whether the video fragment is locally stored on the cache server, and on the premise that a download rate is satisfied, preferably select a video fragment that is quite possibly locally cached on the cache server. This reduces a probability that the cache server obtains a video fragment from a source site, thereby reducing a time for obtaining a video fragment by the terminal.

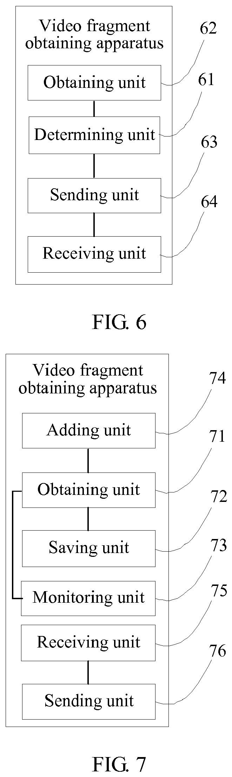

Further, to implement the method shown in FIG. 2 and FIG. 3, an embodiment of the present invention further provides a video fragment obtaining apparatus. The apparatus may be located in a terminal, and is configured to reduce a delay of obtaining a video fragment. As shown in FIG. 6, the apparatus includes a determining unit 61, an obtaining unit 62, a sending unit 63, and a receiving unit 64.

The determining unit 61 is configured to determine, according to a trigger condition for obtaining a video fragment, that a video fragment needing to be obtained by the terminal is an N^{th} video fragment of the video file.

N is a positive integer.

The trigger condition is: Bit rate conversion information entered by a user is received; or information indicating that frame freezing occurs in playing of the video file is received; or a touch operation of a user is received, where the touch operation includes a dragging operation.

The obtaining unit 62 is configured to obtain video index information of the video file from a cache server.

The video index information includes sub-file information corresponding to at least two bit rates, and sub-file information corresponding to each bit rate includes download addresses of different video fragments and corresponding priority information.

The priority information is used to represent a probability that a video fragment stored on the cache server is eliminated.

The priority information includes popularity information. Higher-popularity information represents a smaller probability that a video fragment that is stored on the cache server and corresponds to the popularity information is eliminated.

When the popularity information is 0 or null, it represents that the cache server stores no video fragment corresponding to the popularity information.

The determining unit 61 is further configured to determine a download address of the N^{th} video fragment according to a download rate of the terminal and the video index information that is obtained by the obtaining unit 62.

The sending unit 63 is configured to send a request message for obtaining a video fragment to the cache server.

The request message for obtaining a video fragment includes the download address of the N^{th} video fragment determined by the determining unit 61.

The receiving unit 64 is configured to receive the N^{th} video fragment returned by the cache server.

The determining unit 61 is specifically configured to determine, according to the download rate of the terminal, sub-file information corresponding to a bit rate satisfying the download rate of the terminal.

The determining unit 61 is further specifically configured to obtain, from the sub-file information corresponding to the bit rate satisfying the download rate of the terminal, a download address of an N^{th} video fragment in sub-file information that corresponds to the bit rate and in which the N^{th} video fragment has highest-popularity information.

The determining unit 61 is further specifically configured to determine, according to the download rate of the terminal, that sub-file information corresponding to a bit rate satisfying the download rate of the terminal does not exist.

The determining unit 61 is further specifically configured to obtain, from the video index information, a download address of an N^{th} video fragment in sub-file information corresponding to a lowest bit rate.

Compared with the prior art in which to-be-played video fragment information is obtained, according to the video fragment obtaining apparatus provided in this embodiment of the present invention, when the terminal needs to obtain an N^{th} video fragment of a video file, the terminal determines, as a request address according to priority information of N^{th} video fragments at different bit rates in video index information and a download rate of the terminal, a download address of an N^{th} video fragment that corresponds to highest-priority information and is at a bit rate satisfying the download rate of the terminal, to obtain the video fragment. According to the solution provided in this embodiment of the present invention, a probability of an upstream operation of a cache server can be reduced, thereby reducing a time for obtaining a video fragment by a terminal, and further reducing a delay of playing the video fragment on the terminal.

Further, this embodiment of the present invention provides another video fragment obtaining apparatus. The terminal first determines, according to a download rate of the terminal, a bit rate satisfying the download rate, and determines, according to priority information, a download address corresponding to an N^{th} video fragment. Therefore, not only the download rate of the terminal can be satisfied, but also the N^{th} video fragment can be directly obtained from a cache server, and the cache server does not need to first obtain the N^{th} video fragment from a source site and then send the N^{th} video fragment to the terminal, thereby further reducing a delay of obtaining the video fragment.

Further, to implement the method shown in FIG. 4 and FIG. 5, an embodiment of the present invention further provides another video fragment obtaining apparatus. The apparatus may be located in a cache server, and is configured to reduce a delay of playing a video fragment. As shown in FIG. 7, the apparatus includes an obtaining unit 71, a saving unit 72, a monitoring unit 73, an adding unit 74, a receiving unit 75, and a sending unit 76.

The obtaining unit 71 is configured to obtain video index information of a video file from a source site.

The saving unit 72 is configured to save the video index information of the video file.

The monitoring unit 73 is configured to monitor a quantity of times that each video fragment of the video file is requested, to obtain priority information of each video fragment of the video file.

The priority information of the video fragment is specifically a quantity of times that the video fragment is requested; or is obtained through conversion according to a preset rule and a quantity of times that the video fragment is requested.

The obtaining unit 71 is further configured to periodically obtain the priority information corresponding to each video fragment of the video file.

The adding unit 74 is configured to add the priority information, obtained by the obtaining unit 71, corresponding to each video fragment of the video file to the video index information.

The receiving unit 75 is configured to receive a request, sent by a terminal, for obtaining the video index information.

The sending unit 76 is configured to send the video index information to the terminal, so that the terminal determines, according to the video index information, a download address of a video fragment needing to be downloaded.

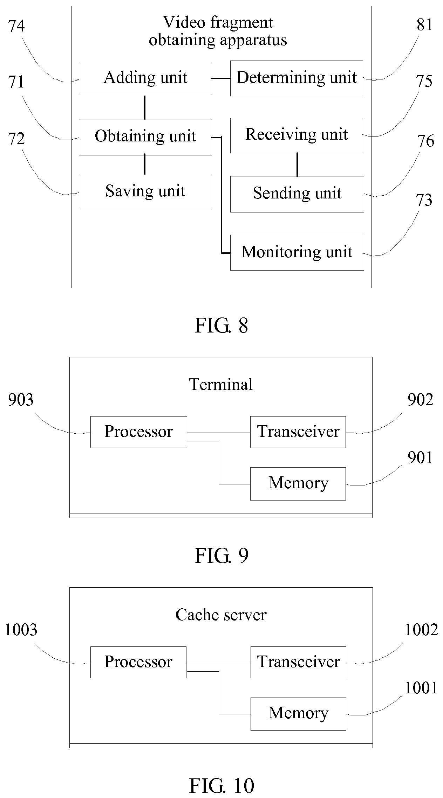

Further, as shown in FIG. 8, the apparatus further includes a determining unit 81.

The determining unit 81 is configured to determine whether each video fragment of the video file is locally cached.

The adding unit 74 is specifically configured to: when the determining unit 81 determines that the video fragment is locally cached, add the obtained priority information corresponding to the video fragment to the video index information; or when the determining unit 81 determines that the video fragment is not locally cached, set the obtained priority information corresponding to the video fragment to 0 or null, and add the obtained priority information to the video index information.

Compared with the prior art in which to-be-played video fragment information is obtained, in this embodiment of the present invention, the cache server monitors a quantity of times that each video fragment of a video file is requested, to obtain priority information of each video fragment; adds the priority information of each video fragment to video index information, so that a terminal can determine, according to the priority information of the video fragment in the video index information, a probability that each video fragment is stored on the cache server, and preferably select a video fragment that is quite possibly cached locally on the cache server. This reduces a probability that the cache server obtains a video fragment from a source site, thereby reducing a time for obtaining a video fragment by the terminal, and further reducing a delay of playing the video fragment.

Further, this embodiment of the present invention provides another video fragment obtaining apparatus. The cache server determines whether a video fragment is locally cached, to add priority information corresponding to the video fragment to corresponding video index information, or set priority information corresponding to the video fragment to 0 or null and add the priority information to corresponding video index information. In this way, the terminal may determine, according to the priority information corresponding to the video fragment in the video index information, whether the video fragment is locally stored on the cache server, and on the premise that a download rate is satisfied, preferably select a video fragment that is locally stored on the cache server, thereby reducing a time for obtaining a video fragment by the terminal.

Still further, an embodiment of the present invention further provides a terminal. As shown in FIG. 9, the terminal includes a memory 901, a transceiver 902, and a processor 903. Both the memory 901 and the transceiver 902 are connected to the processor 903. The terminal is configured to execute the method implemented by the terminal in the embodiment shown in FIG. 2 and FIG. 3.

The memory 901 is configured to store computer executable program code.

The transceiver 902, and the processor 903 coupled to the memory 901 and the transceiver 902.

The program code includes an instruction. The processor 903 executes the instruction, to instruct a network element to perform the following operations:
determining, according to a trigger condition for obtaining a video fragment, that a video fragment needing to be obtained by the terminal is an N^{th} video fragment of a video file, where N is a positive integer;
obtaining video index information of the video file from a cache server, where the video index information includes sub-file information corresponding to at least two bit rates, and sub-file information corresponding to each bit rate includes download addresses of different video fragments and corresponding priority information;
determining a download address of the N^{th} video fragment according to a download rate of the terminal and the video index information;
sending a request message for obtaining a video fragment to the cache server, where the request message for obtaining a video fragment includes the download address of the N^{th} video fragment; and
receiving the N^{th} video fragment returned by the cache server.

Compared with the prior art in which to-be-played video fragment information is obtained, according to the terminal provided in this embodiment of the present invention, when the terminal needs to obtain an N^{th} video fragment of a video file, the terminal determines, as a request address according to priority information of N^{th} video fragments at different bit rates in video index information and a download rate of the terminal, a download address of an N^{th} video fragment that corresponds to highest-priority information and is at a bit rate satisfying the download rate of the terminal, to obtain the video fragment. According to the solution provided in the present invention, a probability of an upstream operation of a cache server can be reduced, thereby reducing a time for obtaining a video fragment by the terminal, and further reducing a delay of playing the video fragment on the terminal.

Further, this embodiment of the present invention provides the terminal. The terminal first determines, according to the download rate of the terminal, a bit rate satisfying the download rate, and determines, according to priority information, a download address corresponding to an N^{th} video fragment. Therefore, not only the download rate of the terminal can be satisfied, but also the N^{th} video fragment can be directly obtained from the cache server, and the cache server does not need to first obtain the N^{th} video fragment from a source site and then send the N^{th} video fragment to the terminal, thereby reducing a delay of obtaining the video fragment.

Still further, an embodiment of the present invention further provides a cache server. As shown in FIG. 10, the cache server includes a memory 1001, a transceiver 1002, and a processor 1003. Both the transceiver 1002 and the memory 1001 are connected to the processor 1003. The cache server is configured to execute the method implemented by the cache server in the embodiment shown in FIG. 4 and FIG. 5.

The memory 1001 is configured to store computer executable program code.

The transceiver 1002, and the processor 1003 coupled to the memory 1001 and the transceiver 1002.

The program code includes an instruction. The processor executes the instruction, to instruct a network element to perform the following operations:
obtaining video index information of a video file from a source site and saving the video index information;
monitoring a quantity of times that each video fragment of the video file is requested, to obtain priority information of each video fragment of the video file;
periodically obtaining the priority information corresponding to each video fragment of the video file, and adding the obtained priority information corresponding to each video fragment of the video file to the video index information;
receiving a request, sent by a terminal, for obtaining the video index information; and
sending the video index information to the terminal, so that the terminal determines, according to the video index information, a download address of a video fragment needing to be downloaded.

Compared with the prior art in which to-be-played video fragment information is obtained, in this embodiment of the present invention, the cache server monitors a quantity of times that each video fragment of a video file is requested, to obtain priority information of each video fragment; adds the priority information of each video fragment to video index information, so that a terminal can determine, according to the priority information of the video fragment in the video index information, a probability that each video fragment is stored on the cache server, and preferably select a video fragment that is quite possibly locally cached on the cache server. This reduces a probability that the cache server obtains a video fragment from a source site, thereby reducing a time for obtaining a video fragment by the terminal, and further reducing a delay of playing the video fragment.

It should be noted that for other descriptions corresponding to the units of the video fragment obtaining apparatus provided in the embodiments of the present invention, refer to the corresponding descriptions in FIG. 2, FIG. 3, FIG. 4, and FIG. 5. Details are not described herein again.

The video fragment obtaining apparatus provided in the embodiments of the present invention can implement the method embodiments provided above. For specific functional implementation, refer to the descriptions in the method embodiments. Details are not described herein again. The video fragment obtaining method and apparatus provided in the embodiments of the present invention may be applicable to, but not limited to, a scenario in which a terminal directly obtains, from a cache server, a video fragment needing to be obtained, and plays the video fragment.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A video fragment obtaining method, wherein the method is used by a terminal to obtain a video fragment of a video file, and comprises:
Determining (201), according to a trigger condition for obtaining a video fragment, that a video fragment needing to be obtained by the terminal is an N^{th} video fragment of the video file, wherein N is a positive integer;
obtaining (202) video index information of the video file from a cache server, wherein the video index information comprises sub-file information corresponding to at least two bit rates, and sub-file information corresponding to each bit rate comprises download addresses of different video fragments and corresponding priority information;
determining (203) a download address of the N^{th} video fragment according to a download rate of the terminal and the video index information;
sending (204) a request message for obtaining a video fragment to the cache server, wherein the request message for obtaining a video fragment comprises the download address of the N^{th} video fragment; and
receiving (205) the N^{th} video fragment returned by the cache server;
wherein the priority information is used to represent a probability that a video fragment stored on the cache server is eliminated;
wherein the priority information comprises popularity information, and higher-popularity information represents a smaller probability that a video fragment that is stored on the cache server and corresponds to the popularity information is eliminated; and
wherein the step of determining a download address of the N^{th} video fragment according to a download rate of the terminal and the video index information specifically comprises:
determining (301), according to the download rate of the terminal, sub-file information corresponding to a bit rate satisfying the download rate of the terminal; and
obtaining (302), from the sub-file information corresponding to the bit rate satisfying the download rate of the terminal, a download address of an N^{th} video fragment in sub-file information that corresponds to the bit rate and in which the N^{th} video fragment has highest popularity information; or
determining (303), according to the download rate of the terminal, that sub-file information corresponding to a bit rate satisfying the download rate of the terminal does not exist; and
obtaining (304), from the video index information, a download address of an N^{th} video fragment in sub-file information corresponding to a lowest bit rate.

2. The video fragment obtaining method according to claim 1, wherein the trigger condition is specifically:
bit rate conversion information entered by a user is received; or
information indicating that frame freezing occurs in playing of the video file is received; or
a touch operation of a user is received, wherein the touch operation comprises a dragging operation.

3. A video fragment obtaining method, wherein the method is applied to a cache server, and the method comprises:
obtaining (401) video index information of a video file from a source site and saving the video index information;
monitoring (402) a quantity of times that each video fragment of the video file is requested, to obtain priority information of each video fragment of the video file;
periodically obtaining (403) the priority information corresponding to each video fragment of the video file, and adding (404) the obtained priority information corresponding to each video fragment of the video file to the video index information;
receiving (405) a request, sent by a terminal, for obtaining the video index information; and
sending (406) the video index information to the terminal, so that the terminal determines, according to the video index information, a download address of a video fragment needing to be downloaded;
wherein the priority information is used to represent a probability that a video fragment stored on the cache server is eliminated;
wherein the priority information comprises popularity information, and higher-popularity information represents a smaller probability that a video fragment that is stored on the cache server and corresponds to the popularity information is eliminated;
wherein before the adding the obtained priority information corresponding to each video fragment of the video file to the video index information, the method further comprises: determining (501) whether each video fragment of the video file is locally cached; and the adding the priority information corresponding to each video fragment of the video file to the video index information is specifically: when the video fragment is locally cached, adding (502) the obtained priority information corresponding to the video fragment to the video index information; or when the video fragment is not locally cached, setting (503) the obtained priority information corresponding to the video fragment to 0 or null, and adding the obtained priority information to the video index information.

4. The video fragment obtaining method according to claim 3, wherein the priority information of the video fragment is specifically:
a quantity of times that the video fragment is requested; or
obtained through conversion according to a preset rule and a quantity of times that the video fragment is requested.

5. A video fragment obtaining apparatus, wherein the apparatus is located in a terminal, and comprises:
a determining unit (61), configured to determine, according to a trigger condition for obtaining a video fragment, that a video fragment needing to be obtained by the terminal is an N^{th} video fragment of a video file, wherein N is a positive integer;
an obtaining unit (62), configured to obtain video index information of the video file from a cache server, wherein the video index information comprises sub-file information corresponding to at least two bit rates, and sub-file information corresponding to each bit rate comprises download addresses of different video fragments and corresponding priority information, wherein
the determining unit (61) is further configured to determine a download address of the N^{th} video fragment according to a download rate of the terminal and the video index information that is obtained by the obtaining unit (62);
a sending unit (63), configured to send a request message for obtaining a video fragment to the cache server, wherein the request message for obtaining a video fragment comprises the download address of the N^{th} video fragment determined by the determining unit (61); and
a receiving unit (64), configured to receive the N^{th} video fragment returned by the cache server;
wherein the priority information is used to represent a probability that a video fragment stored on the cache server is eliminated;
wherein the priority information comprises popularity information, and higher-popularity information represents a smaller probability that a video fragment that is stored on the cache server and corresponds to the popularity information is eliminated; and
wherein the determining unit (61) is specifically configured to determine, according to the download rate of the terminal, sub-file information corresponding to a bit rate satisfying the download rate of the terminal; and
the determining unit (61) is further specifically configured to obtain, from the sub-file information that corresponds to the bit rate satisfying the download rate of the terminal and that is determined by the determining unit, a download address of an N^{th} video fragment in sub-file information that corresponds to the bit rate and in which the N^{th} video fragment has highest-popularity information; or
the determining unit (61) is further specifically configured to determine, according to the download rate of the terminal, that sub-file information corresponding to a bit rate satisfying the download rate of the terminal does not exist; and
the determining unit (61) is further specifically configured to obtain, from the video index information, a download address of an N^{th} video fragment in sub-file information corresponding to a lowest bit rate.

6. The video fragment obtaining apparatus according to claim 5 , wherein the trigger condition is specifically:
bit rate conversion information entered by a user is received; or
information indicating that frame freezing occurs in playing of the video file is received; or
a touch operation of a user is received, wherein the touch operation comprises a dragging operation.

7. A video fragment obtaining apparatus, wherein the apparatus is located in a cache server, and the apparatus comprises:
an obtaining unit (71), configured to obtain video index information of a video file from a source site;
a saving unit (72), configured to save the video index information of the video file;
a monitoring unit (73), configured to monitor a quantity of times that each video fragment of the video file is requested, to obtain priority information of each video fragment of the video file, wherein the priority information is used to represent a probability that a video fragment stored on the cache server is eliminated;
wherein the priority information comprises popularity information, and higher-popularity information represents a smaller probability that a video fragment that is stored on the cache server and corresponds to the popularity information is eliminated; and
the obtaining unit (71) is further configured to periodically obtain the priority information corresponding to each video fragment of the video file;
an adding unit (74), configured to add the priority information that is obtained by the obtaining unit (71) and corresponds to each video fragment of the video file to the video index information;
a receiving unit (75), configured to receive a request, sent by a terminal, for obtaining the video index information;
a sending unit (76), configured to send the video index information to the terminal, so that the terminal determines, according to the video index information, a download address of a video fragment needing to be downloaded; and
a determining unit, configured to determine whether each video fragment of the video file is locally cached; and
the adding unit (74) is specifically configured to: when the determining unit determines that the video fragment is locally cached, add the obtained priority information corresponding to the video fragment to the video index information; or when the determining unit determines that the video fragment is not locally cached, set the obtained priority information corresponding to the video fragment to 0 or null, and add the obtained priority information to the video index information.

8. The video fragment obtaining apparatus according to claim 7, wherein the priority information of the video fragment is specifically:
a quantity of times that the video fragment is requested; or
obtained through conversion according to a preset rule and a quantity of times that the video fragment is requested.

## Patentansprüche

1. Verfahren zum Erhalten von Videofragmenten, wobei das Verfahren von einem Endgerät verwendet wird, um ein Videofragment einer Videodatei zu erhalten, und umfasst:
Bestimmen (201), gemäß einer Auslösebedingung für das Erhalten eines Videofragments, dass ein Videofragment, das von dem Endgerät erhalten werden muss, ein N^{tes}-Videofragment der Videodatei ist, wobei N eine positive Ganzzahl ist;
Erhalten (202) von Videoindexinformationen der Videodatei von einem Cache-Server, wobei die Videoindexinformationen Unterdateiinformationen umfassen, die wenigstens zwei Bitraten entsprechen, und Unterdateiinformationen, die jeder Bitrate entsprechen, Download-Adressen unterschiedlicher Videofragmente und entsprechende Prioritätsinformationen umfassen;
Bestimmen (203) einer Download-Adresse des N^{ten} Videofragments gemäß einer Download-Rate des Endgeräts und den Videoindexinformationen;
Senden (204) einer Anforderungsnachricht für das Erhalten eines Videofragments an den Cache-Server, wobei die Anforderungsnachricht für das Erhalten eines Videofragments die Download-Adresse des N^{ten} Videofragments umfasst; und
Empfangen (205) des N^{ten} Videofragments, das von dem Cache-Server zurückgegeben wird;
wobei die Prioritätsinformationen verwendet werden, um eine Wahrscheinlichkeit darzustellen, dass ein Videofragment, das auf dem Cache-Server gespeichert ist, eliminiert ist;
wobei die Prioritätsinformationen Beliebtheitsinformationen umfassen und Informationen mit höherer Beliebtheit eine kleinere Wahrscheinlichkeit darstellen, dass ein Videofragment, das auf dem Cache-Server gespeichert ist und den Beliebtheitsinformationen entspricht, eliminiert ist; und
wobei der Schritt des Bestimmens einer Download-Adresse des N^{ten} Videofragments gemäß einer Download-Rate des Endgeräts und den Videoindexinformationen insbesondere umfasst:
Bestimmen (301), gemäß der Download-Rate des Endgeräts, von Unterdateiinformationen, die einer Bitrate entsprechen, welche die Download-Rate des Endgeräts erfüllt; und
Erhalten (302), aus den Unterdateiinformationen, die der Bitrate entsprechen, welche die Download-Rate des Endgeräts erfüllt, einer Download-Adresse eines N^{ten} Videofragments in Unterdateiinformationen, die der Bitrate entsprechen und worin das N^{te} Videofragment Informationen höchster Beliebtheit aufweist; oder
Bestimmen (303), gemäß der Download-Rate des Endgeräts, dass Unterdateiinformationen, die einer Bitrate entsprechen, welche die Download-Rate des Endgeräts erfüllt, nicht vorhanden sind; und
Erhalten (304), aus den Videoindexinformationen, einer Download-Adresse eines N^{ten} Videofragments in Unterdateiinformationen, die einer niedrigsten Bitrate entsprechen.

2. Verfahren zum Erhalten von Videofragmenten gemäß Anspruch 1, wobei die Auslösebedingung insbesondere beinhaltet:
Bitratenumwandlungsinformationen, die von einem Benutzer eingegeben werden, werden empfangen; oder
Informationen, die angeben, dass ein Rahmeneinfrieren beim Abspielen der Videodatei erfolgt, werden empfangen; oder
eine Berührungsoperation eines Benutzers wird empfangen, wobei die Berührungsoperation eine Ziehoperation umfasst.

3. Verfahren zum Erhalten von Videofragmenten, wobei das Verfahren auf einen Cache-Server angewendet wird und das Verfahren umfasst:
Erhalten (401) von Videoindexinformationen einer Videodatei von einem Quellstandort und Speichern der Videoindexinformationen;
Überwachen (402) einer Anzahl von Malen, die jedes Videofragment der Videodatei angefordert wird, um Prioritätsinformationen jedes Videofragments der Videodatei zu erhalten;
periodisches Erhalten (403) der Prioritätsinformationen, die jedem Videofragment der Videodatei entsprechen, und Hinzufügen (404) der erhaltenen Prioritätsinformationen, die jedem Videofragment der Videodatei entsprechen, zu den Videoindexinformationen;
Empfangen (405) einer von einem Endgerät gesendeten Anforderung für das Erhalten der Videoindexinformationen; und
Senden (406) der Videoindexinformationen an das Endgerät, sodass das Endgerät, gemäß den Videoindexinformationen, eine Download-Adresse eines Videofragments bestimmt, das heruntergeladen werden muss;
wobei die Prioritätsinformationen verwendet werden, um eine Wahrscheinlichkeit darzustellen, dass ein Videofragment, das auf dem Cache-Server gespeichert ist, eliminiert ist;
wobei die Prioritätsinformationen Beliebtheitsinformationen umfassen und Informationen mit höherer Beliebtheit eine kleinere Wahrscheinlichkeit darstellen, dass ein Videofragment, das auf dem Cache-Server gespeichert ist und den Beliebtheitsinformationen entspricht, eliminiert ist;
wobei, bevor die erhaltenen Prioritätsinformationen, die jedem Videofragment der Videodatei entsprechen, zu den Videoindexinformationen hinzugefügt werden, das Verfahren ferner umfasst: Bestimmen (501), ob jedes Videofragment der Videodatei lokal zwischengespeichert ist; und das Hinzufügen der Prioritätsinformationen, die jedem Videofragment der Videodatei entsprechen, zu den Videoindexinformationen insbesondere beinhaltet: wenn das Videofragment lokal zwischengespeichert ist, Hinzufügen (502) der erhaltenen Prioritätsinformationen, die dem Videofragment entsprechen, zu den Videoindexinformationen; oder wenn das Videofragment nicht lokal zwischengespeichert ist, Einstellen (503) der erhaltenen Prioritätsinformationen, die dem Videofragment entsprechen, auf 0 oder Null und Hinzufügen der erhaltenen Prioritätsinformationen zu den Videoindexinformationen.

4. Verfahren zum Erhalten von Videofragmenten gemäß Anspruch 3, wobei die Prioritätsinformationen des Videofragments insbesondere:
eine Anzahl von Malen ist, die das Videofragment angefordert wird; oder
durch Umwandlung gemäß einer voreingestellten Regel erhalten wird und eine Anzahl von Malen ist, die das Videofragment angefordert wird.

5. Vorrichtung zum Erhalten von Videofragmenten, wobei sich die Vorrichtung in einem Endgerät befindet und umfasst:
eine Bestimmungseinheit (61), die dafür ausgelegt ist zu bestimmen, gemäß einer Auslösebedingung für das Erhalten eines Videofragments, dass ein Videofragment, das von dem Endgerät erhalten werden muss, ein N^{tes} Videofragment einer Videodatei ist, wobei N eine positive Ganzzahl ist;
eine Erhalteeinheit (62), die dafür ausgelegt ist, Videoindexinformationen der Videodatei von einem Cache-Server zu erhalten, wobei die Videoindexinformationen Unterdateiinformationen umfassen, die wenigstens zwei Bitraten entsprechen, und Unterdateiinformationen, die jeder Bitrate entsprechen, Download-Adressen unterschiedlicher Videofragmente und entsprechende Prioritätsinformationen umfassen, wobei
die Bestimmungseinheit (61) ferner dafür ausgelegt ist, eine Download-Adresse des N^{ten} Videofragments gemäß einer Download-Rate des Endgeräts und den Videoindexinformationen, die von der Erhalteeinheit (62) erhalten werden, zu bestimmen;
eine Sendeeinheit (63), die dafür ausgelegt ist, eine Anforderungsnachricht für das Erhalten eines Videofragments an den Cache-Server zu senden, wobei die Anforderungsnachricht für das Erhalten eines Videofragments die Download-Adresse des N^{ten} Videofragments umfasst, die von der Bestimmungseinheit (61) bestimmt wird; und
eine Empfangseinheit (64), die dafür ausgelegt ist, das von dem Cache-Server zurückgegebene N^{te} Videofragment zu empfangen;
wobei die Prioritätsinformationen verwendet werden, um eine Wahrscheinlichkeit darzustellen, dass ein Videofragment, das auf dem Cache-Server gespeichert ist, eliminiert ist;
wobei die Prioritätsinformationen Beliebtheitsinformationen umfassen und Informationen mit höherer Beliebtheit eine kleinere Wahrscheinlichkeit darstellen, dass ein Videofragment, das auf dem Cache-Server gespeichert ist und den Beliebtheitsinformationen entspricht, eliminiert ist; und
wobei die Bestimmungseinheit (61) insbesondere dafür ausgelegt ist, gemäß der Download-Rate des Endgeräts, Unterdateiinformationen zu bestimmen, die einer Bitrate entsprechen, welche die Download-Rate des Endgeräts erfüllt; und
die Bestimmungseinheit (61) ferner insbesondere dafür ausgelegt ist, aus den Unterdateiinformationen, die der Bitrate entsprechen, welche die Download-Rate des Endgeräts erfüllt, und die von der Bestimmungseinheit bestimmt sind, eine Download-Adresse eines N^{ten} Videofragments in Unterdateiinformationen zu erhalten, die der Bitrate entsprechen und worin das N^{te} Videofragment Informationen höchster Beliebtheit aufweist; oder
die Bestimmungseinheit (61) ferner insbesondere dafür ausgelegt ist, gemäß der Download-Rate des Endgeräts zu bestimmen, dass Unterdateiinformationen, die einer Bitrate entsprechen, welche die Download-Rate des Endgeräts erfüllt, nicht vorhanden sind; und
die Bestimmungseinheit (61) ferner insbesondere dafür ausgelegt ist, aus den Videoindexinformationen eine Download-Adresse eines N^{ten} Videofragments in Unterdateiinformationen zu erhalten, die einer niedrigsten Bitrate entsprechen.

6. Vorrichtung zum Erhalten von Videofragmenten gemäß Anspruch 5, wobei die Auslösebedingung insbesondere beinhaltet:
Bitratenumwandlungsinformationen, die von einem Benutzer eingegeben werden, werden empfangen; oder
Informationen, die angeben, dass ein Rahmeneinfrieren beim Abspielen der Videodatei erfolgt, werden empfangen; oder
eine Berührungsoperation eines Benutzers wird empfangen, wobei die Berührungsoperation eine Ziehoperation umfasst.

7. Vorrichtung zum Erhalten von Videofragmenten, wobei sich die Vorrichtung in einem Cache-Server befindet und die Vorrichtung umfasst:
eine Erhalteeinheit (71), die dafür ausgelegt ist, Videoindexinformationen einer Videodatei von einem Quellstandort zu erhalten;
eine Speichereinheit (72), die dafür ausgelegt ist, die Videoindexinformationen der Videodatei zu speichern;
eine Überwachungseinheit (73), die dafür ausgelegt ist, eine Anzahl von Malen, die jedes Videofragment der Videodatei angefordert wird, zu überwachen, um Prioritätsinformationen jedes Videofragments der Videofragment zu erhalten, wobei die Prioritätsinformationen verwendet werden, um eine Wahrscheinlichkeit darzustellen, dass ein Videofragment, das auf dem Cache-Server gespeichert ist, eliminiert ist;
wobei die Prioritätsinformationen Beliebtheitsinformationen umfassen und Informationen mit höherer Beliebtheit eine kleinere Wahrscheinlichkeit darstellen, dass ein Videofragment, das auf dem Cache-Server gespeichert ist und den Beliebtheitsinformationen entspricht, eliminiert ist; und
die Erhalteeinheit (71) ferner dafür ausgelegt ist, die Prioritätsinformationen, welche jedem Videofragment der Videodatei entsprechen, periodisch zu erhalten;
eine Hinzufügeeinheit (74), die dafür ausgelegt ist, die Prioritätsinformationen, welche von der Erhalteeinheit (71) erhalten werden und jedem Videofragment der Videodatei entsprechen, zu den Videoindexinformationen hinzuzufügen;
eine Empfangseinheit (75), die dafür ausgelegt ist, eine von einem Endgerät gesendete Anforderung für das Erhalten der Videoindexinformationen zu empfangen;
eine Sendeeinheit (76), die dafür ausgelegt ist, die Videoindexinformationen an das Endgerät zu senden, sodass das Endgerät, gemäß den Videoindexinformationen, eine Download-Adresse eines Videofragments bestimmt, das heruntergeladen werden muss; und
eine Bestimmungseinheit, die dafür konfiguriert ist, zu bestimmen, ob jedes Videofragment der Videodatei lokal zwischengespeichert ist; und
die Hinzufügeeinheit (74) insbesondere ausgelegt ist für: wenn die Bestimmungseinheit bestimmt, dass das Videofragment lokal zwischengespeichert ist, Hinzufügen der erhaltenen Prioritätsinformationen, die dem Videofragment entsprechen, zu den Videoindexinformationen; oder, wenn die Bestimmungseinheit bestimmt, dass das Videofragment nicht lokal zwischengespeichert ist, Einstellen der erhaltenen Prioritätsinformationen, die dem Videofragment entsprechen, auf 0 oder Null, und Hinzufügen der erhaltenen Prioritätsinformationen zu den Videoindexinformationen.

8. Vorrichtung zum Erhalten von Videofragmenten gemäß Anspruch 7, wobei die Prioritätsinformationen des Videofragments insbesondere:
eine Anzahl von Malen sind, die das Videofragment angefordert wird; oder
durch Umwandlung gemäß einer voreingestellten Regel erhalten werden und eine Anzahl von Malen sind, die das Videofragment angefordert wird.

## Revendications

1. Procédé d'obtention de fragment vidéo, le procédé étant utilisé par un terminal pour obtenir un fragment vidéo d'un fichier vidéo et comprenant les étapes consistant à :
déterminer (201), selon une condition de déclenchement pour obtenir un fragment vidéo, qu'un fragment vidéo devant être obtenu par le terminal est un N^{ième} fragment vidéo du fichier vidéo, N étant un entier positif ;
obtenir (202) une information d'index vidéo du fichier vidéo auprès d'un serveur cache, l'information d'index vidéo comprenant une information de sous-fichier correspondant à au moins deux débits binaires, et une information de sous-fichier correspondant à chaque débit binaire comprenant des adresses de téléchargement de différents fragments vidéo et une information de priorité correspondante ;
déterminer (203) une adresse de téléchargement du N^{ième} fragment vidéo selon un débit de téléchargement du terminal et l'information d'index vidéo ;
envoyer (204) au serveur cache un message de demande pour obtenir un fragment vidéo, le message de demande pour obtenir un fragment vidéo comprenant l'adresse de téléchargement du N^{ième} fragment vidéo ; et
recevoir (205) le N^{ième} fragment vidéo renvoyé par le serveur cache ;
l'information de priorité étant utilisée pour représenter une probabilité qu'un fragment vidéo stocké sur le serveur cache soit éliminé ;
l'information de priorité comprenant une information de popularité, une information de popularité plus élevée représentant une plus faible probabilité qu'un fragment vidéo qui est stocké sur le serveur cache et qui correspond à l'information de popularité soit éliminé ; et
l'étape de détermination d'une adresse de téléchargement du N^{ième} fragment vidéo selon un débit de téléchargement du terminal et l'information d'index vidéo comprenant spécifiquement les étapes consistant à :
déterminer (301), selon le débit de téléchargement du terminal, une information de sous-fichier correspondant à un débit binaire satisfaisant au débit de téléchargement du terminal ; et
obtenir (302), à partir de l'information de sous-fichier correspondant au débit binaire satisfaisant au débit de téléchargement du terminal, une adresse de téléchargement d'un N^{ième} fragment vidéo dans une information de sous-fichier qui correspond au débit binaire et où le N^{ième} fragment vidéo a une information de popularité maximale ; ou
déterminer (303), selon le débit de téléchargement du terminal, qu'une information de sous-fichier correspondant à un débit binaire satisfaisant au débit de téléchargement du terminal n'existe pas ; et
obtenir (304), à partir de l'information d'index vidéo, une adresse de téléchargement d'un N^{ième} fragment vidéo dans une information de sous-fichier correspondant à un débit binaire minimum.

2. Procédé d'obtention de fragment vidéo selon la revendication 1, dans lequel la condition de déclenchement est spécifiquement :
la réception d'une information de conversion de débit binaire entrée par un utilisateur ; ou
la réception d'une information indiquant qu'un figeage de trame survient pendant la lecture du fichier vidéo ; ou
la réception d'une opération tactile d'un utilisateur, l'opération tactile comprenant une opération de glissement.

3. Procédé d'obtention de fragment vidéo, le procédé étant appliqué à un serveur cache et le procédé comprenant les étapes consistant à :
obtenir (401) une information d'index vidéo d'un fichier vidéo auprès d'un site source et enregistrer l'information d'index vidéo ;
surveiller (402) un nombre de fois que chaque fragment vidéo du fichier vidéo est demandé, afin d'obtenir une information de priorité de chaque fragment vidéo du fichier vidéo ;
obtenir périodiquement (403) l'information de priorité correspondant à chaque fragment vidéo du fichier vidéo et ajouter (404) à l'information d'index vidéo l'information de priorité obtenue correspondant à chaque fragment vidéo du fichier vidéo ;
recevoir (405) une demande, envoyée par un terminal, pour obtenir l'information d'index vidéo ; et
envoyer (406) l'information d'index vidéo au terminal, de sorte que le terminal détermine, selon l'information d'index vidéo, une adresse de téléchargement d'un fragment vidéo devant être téléchargé ;
l'information de priorité étant utilisée pour représenter une probabilité qu'un fragment vidéo stocké sur le serveur cache soit éliminé ;
l'information de priorité comprenant une information de popularité, et une information de popularité plus élevée représentant une plus faible probabilité qu'un fragment vidéo qui est stocké sur le serveur cache et qui correspond à l'information de popularité soit éliminé ;
avant l'ajout à l'information d'index vidéo de l'information de priorité obtenue correspondant à chaque fragment vidéo du fichier vidéo, le procédé comprenant en outre l'étape consistant à : déterminer (501) si chaque fragment vidéo du fichier vidéo est mis en cache localement ; et l'ajout à l'information d'index vidéo de l'information de priorité correspondant à chaque fragment vidéo du fichier vidéo consistant spécifiquement à : quand le fragment vidéo est mis en cache localement, ajouter (502) à l'information d'index vidéo l'information de priorité obtenue correspondant au fragment vidéo ; ou quand le fragment vidéo n'est pas mis en cache localement, fixer (503) sur 0 ou sur nulle l'information de priorité obtenue correspondant au fragment vidéo et ajouter l'information de priorité obtenue à l'information d'index vidéo.

4. Procédé d'obtention de fragment vidéo selon la revendication 3, dans lequel l'information de priorité du fragment vidéo est spécifiquement :
un nombre de fois que le fragment vidéo est demandé ; ou
obtenue par conversion selon une règle prédéfinie et un nombre de fois que le fragment vidéo est demandé.

5. Appareil d'obtention de fragment vidéo, l'appareil étant situé dans un terminal et comprenant :
une unité de détermination (61), configurée pour déterminer, selon une condition de déclenchement pour obtenir un fragment vidéo, qu'un fragment vidéo devant être obtenu par le terminal est un N^{ième} fragment vidéo d'un fichier vidéo, N étant un entier positif ;
une unité d'obtention (62), configurée pour obtenir une information d'index vidéo du fichier vidéo auprès d'un serveur cache, l'information d'index vidéo comprenant une information de sous-fichier correspondant à au moins deux débits binaires, et une information de sous-fichier correspondant à chaque débit binaire comprenant des adresses de téléchargement de différents fragments vidéo et une information de priorité correspondante,
l'unité de détermination (61) étant en outre configurée pour déterminer une adresse de téléchargement du N^{ième} fragment vidéo selon un débit de téléchargement du terminal et l'information d'index vidéo qui est obtenue par l'unité d'obtention (62) ;
une unité d'envoi (63), configurée pour envoyer au serveur cache un message de demande pour obtenir un fragment vidéo, le message de demande pour obtenir un fragment vidéo comprenant l'adresse de téléchargement du N^{ième} fragment vidéo déterminée par l'unité de détermination (61) ; et
une unité de réception (64), configurée pour recevoir le N^{ième} fragment vidéo renvoyé par le serveur cache ;
l'information de priorité étant utilisée pour représenter une probabilité qu'un fragment vidéo stocké sur le serveur cache soit éliminé ;
l'information de priorité comprenant une information de popularité, et une information de popularité plus élevée représentant une plus faible probabilité qu'un fragment vidéo qui est stocké sur le serveur cache et qui correspond à l'information de popularité soit éliminé ; et
l'unité de détermination (61) étant spécifiquement configurée pour déterminer, selon le débit de téléchargement du terminal, une information de sous-fichier correspondant à un débit binaire satisfaisant au débit de téléchargement du terminal ; et
l'unité de détermination (61) étant en outre spécifiquement configurée pour obtenir, à partir de l'information de sous-fichier qui correspond au débit binaire satisfaisant au débit de téléchargement du terminal et qui est déterminée par l'unité de détermination, une adresse de téléchargement d'un N^{ième} fragment vidéo dans une information de sous-fichier qui correspond au débit binaire et où le N^{ième} fragment vidéo a une information de popularité maximale ; ou
l'unité de détermination (61) étant en outre spécifiquement configurée pour déterminer, selon le débit de téléchargement du terminal, qu'une information de sous-fichier correspondant à un débit binaire satisfaisant au débit de téléchargement du terminal n'existe pas ; et
l'unité de détermination (61) étant en outre spécifiquement configurée pour obtenir, à partir de l'information d'index vidéo, une adresse de téléchargement d'un N^{ième} fragment vidéo dans une information de sous-fichier correspondant à un débit binaire minimum.

6. Appareil d'obtention de fragment vidéo selon la revendication 5, dans lequel la condition de déclenchement est spécifiquement :
la réception d'une information de conversion de débit binaire entrée par un utilisateur ; ou
la réception d'une information indiquant qu'un figeage de trame survient pendant la lecture du fichier vidéo ; ou
la réception d'une opération tactile d'un utilisateur, l'opération tactile comprenant une opération de glissement.

7. Appareil d'obtention de fragment vidéo, l'appareil étant situé dans un serveur cache et l'appareil comprenant :
une unité d'obtention (71), configurée pour obtenir une information d'index vidéo d'un fichier vidéo auprès d'un site source ;
une unité d'enregistrement (72), configurée pour enregistrer l'information d'index vidéo du fichier vidéo ;
une unité de surveillance (73), configurée pour surveiller un nombre de fois que chaque fragment vidéo du fichier vidéo est demandé, afin d'obtenir une information de priorité de chaque fragment vidéo du fichier vidéo, l'information de priorité étant utilisée pour représenter une probabilité qu'un fragment vidéo stocké sur le serveur cache soit éliminé ;
l'information de priorité comprenant une information de popularité, et une information de popularité plus élevée représentant une plus faible probabilité qu'un fragment vidéo qui est stocké sur le serveur cache et qui correspond à l'information de popularité soit éliminé ; et
l'unité d'obtention (71) étant en outre configurée pour obtenir périodiquement l'information de priorité correspondant à chaque fragment vidéo du fichier vidéo ;
une unité d'ajout (74), configurée pour ajouter à l'information d'index vidéo l'information de priorité qui est obtenue par l'unité d'obtention (71) et qui correspond à chaque fragment vidéo du fichier vidéo ;
une unité de réception (75), configurée pour recevoir une demande, envoyée par un terminal, pour obtenir l'information d'index vidéo ;
une unité d'envoi (76), configurée pour envoyer l'information d'index vidéo au terminal, de sorte que le terminal détermine, selon l'information d'index vidéo, une adresse de téléchargement d'un fragment vidéo devant être téléchargé ; et
une unité de détermination, configurée pour déterminer si chaque fragment vidéo du fichier vidéo est mis en cache localement ; et
l'unité d'ajout (74) étant spécifiquement configurée pour: quand l'unité de détermination détermine que le fragment vidéo est mis en cache localement, ajouter à l'information d'index vidéo l'information de priorité obtenue correspondant au fragment vidéo ; ou quand l'unité de détermination détermine que le fragment vidéo n'est pas mis en cache localement, fixer sur 0 ou sur nulle l'information de priorité obtenue correspondant au fragment vidéo et ajouter l'information de priorité obtenue à l'information d'index vidéo.

8. Appareil d'obtention de fragment vidéo selon la revendication 7, dans lequel l'information de priorité du fragment vidéo est spécifiquement :
un nombre de fois que le fragment vidéo est demandé ; ou
obtenue par conversion selon une règle prédéfinie et un nombre de fois que le fragment vidéo est demandé.
